# EUROPÄISCHE PATENTSCHRIFT

(11) **EP 0 449 057 B1**
(45) Veröffentlichungstag und Bekanntmachung des Hinweises auf die Patenterteilung: **08.12.1993**
(21) Anmeldenummer: 91104020.2
(22) Anmeldetag: 15.03.1991
(51) Int. Cl.: A01D 34/70, A01D 43/06

(54) **Mittels Hubkolben aufklappbarer Sammelgut-Behälter**
Collecting container opening by means of an actuator
Récipient collecteur s'ouvrant au moyen d'un piston

(30) Priorität: 29.03.1990 DE 9003661 U
(43) Veröffentlichungstag der Anmeldung: 02.10.1991
(73) Patentinhaber: Maschinen-Mohr Inh.: Hermann Mohr, D-91792 Ellingen (DE)
(72) Erfinder: Mohr, Hermann, W-8836 Ellingen (DE)
(74) Vertreter: Matschkur, Götz, Lindner Patent- und Rechtsanwälte

(56) Entgegenhaltungen:
- EP-A- 0 318 940
- DE-C- 3 539 140

## Beschreibung

Die Erfindung betrifft einen Sammelgut-Behälter, insbesondere zum Anbau an Fahrzeugen, Anhängern, Mäh- oder Kehrvorrichtungen, mit einem scharniergelenkig ausgeführten Wandungsabschnitt, der mittels eines im Behälterinneren abgestützten linearen Stellantriebs auf- und zuklappbar ist.

Derartige Sammelgut-Behälter sind bei Mähvorrichtungen bekannt (vgl. Patentschrift DE 35 39 140). Der Behälter wird als Mähcontainer verwendet, der heb- und senkbar auf dem Fahrzeug angeordnet und kastenartig und mit einer nach oben aufschwenkbaren Rückwand ausgenbildet ist. Darin wird das Mäh- oder Kehrgut eingeblasen, wobei die Rückwand über einen Hydraulikzylinder auf- und zumachbar ist. Das Kolbenende des Hydraulikzylinder ist über eine Toleranzausgleichsfeder mit der Rückwand derart gekoppelt, daß der Kolben die Toleranzausgleichsfeder durchsetzt und mit deren Ende verbunden ist, das dem Verbindungsende zur Rückwand bzw. -tür abgelegen ist. Derartige, mittels eines gabelstaplerartigen Hubgerüsts heb- und senkbare Container auf Mähvorrichtungen haben den Vorteil, daß sie nach dem Befüllen sehr einfach auf einen LKW oder auch eine andere hochliegende Deponiestelle ausgeleert werden können. Für diese Entleerbarkeit ist dabei auch die einfache hydraulisch betätigbare Auf- und Zumachbarkeit der Rückwandtür bedeutsam, da ja beim Anheben die Rückwand noch geschlossen sein muß und nach dem Anheben eine Entriegelung von Hand nicht mehr in Frage kommt; denn der Container liegt dann in einer derartigen Höhe, daß eine Handhabung weitgehend ausgeschlossen ist.

Allerdings ist die mittels Hydraulikzylinder realisierte Vorrichtung zum Auf- und Zumachen der Rückwandtür kompliziert ausgebildet: neben besonderen, an der Innenseite der Rückwandtür angeordneten Lagerbüchsen ist zudem noch eine Drehgelenkstelle notwendig.

Mithin wird das der Erfindung zugrundeliegende Problem aufgeworfen, bei einem insbesondere für Mähvorrichtungen geeigneten Behälter die Verbindungskonstruktion zwischen dem Hubkolben des Stellantriebs und dem auf- und zuklappbaren Wandabschnitt zu vereinfachen und weniger störanfällig auszubilden. Zur Lösung wird bei einem Behälter mit den eingangs genannten Merkmalen erfindungsgemäß vorgeschlagen, daß der Hubkolben des Stellantriebs durch eine im auf- und zuklappbaren Wandungsabschnitt vorgenommene Aussparung hindurchgeführt ist und - innerhalb und/oder außerhalb des Behälters - ein oder mehrere Anschlagelemente zur Anlage an den klappbaren Wandungsabschnitt aufweist.

Es wird also ein für vielfältige Zwecke einsetzbarer Behälter geschaffen, der in konstruktiv außerordentlich einfacher Weise geöffnet und geschlossen werden kann: Beim Öffnen wird der Hubkolben vom Stellantrieb aus ausgefahren, wobei ein im Behälter-Innenbereich starr am Hubkolben befestigtes Anschlagelement gegen die Innenseite des auf- und zuklappbaren Wandungsabschnitts, z. B. Rückwandtür, stößt und dann diesen um seine Scharnierachse verschwenkt. Zum Schließen wird der Hubkolben in das Stellantriebsaggregat eingefahren, wobei ein starr auf dem außerhalb des Behälters liegenden Hubkolben-Abschnitt befestigtes Anschlagelement gegen die Außenseite der Wandungsklappe gedrückt wird und dabei dieser eine Verschwenkung um die Scharnierachse zum Zuklappen des Behälters erteilt. Bei waagrechter Scharnierachse, wenn die Behälter-Klappwand entweder nach oben oder nach unten verschwenkbar angeordnet ist, reicht ein Anschlagelement, angeordnet auf einem entweder im Behälterinneren oder außerhalb des Behälters liegenden Abschnitt des Hubkolbens, grundsätzlich aus; das Eigengewicht der Klappwand sorgt für ein selbsttätiges Auf- bzw. Zuklappen. Die Bewegungskopplung vom Hubkolben zur Wandungsklappe wird dabei durch Druck bzw. Zug des Anschlagelements auf die Innen- bzw. Außenseite der Wandungsklappe bewirkt. Bei einer vertikal verlaufenden Scharnierachse, bei der das Eigengewicht der Klappwandung nicht in eine Schwenkbewegung umsetzbar ist, sind zwei Anschlagelemente auf dem Hubkolben sowohl innerhalb als auch außerhalb des Behälters zweckmäßig.

Zur Vermeidung von mechanischem Verschleiß und Verformungen sowie zum Ausgleich von Maß- und Herstellungstoleranzen ist nach einer Weiterbildung vorgesehen, das Anschlagelement als Federelement auszuführen. Vor allem wenn das Anschlagelement sich auf dem Hubkolben außerhalb des Behälters befindet, ist zur Realisierung des Anschlagelements eine Gummihohlfeder vorteilhaft, die den Hubkolben umgibt bzw. von diesem innen durchsetzt wird. Beim Schließen der Wandungsklappe schlägt an ihre Außenseite die Gummihohlfeder an, wobei mechanische Stöße gepuffert und kompensiert werden. Zudem können Ungenauigkeiten des Stellantriebs, beispielsweise eines hydraulischen Stellzylinders beim vollständigen Einfahren bzw. Schließen ausgeglichen werden, indem die Gummihohlfeder als Toleranzausgleichsfeder dient.

In vorteilhafter Weiterführung dieses Gedankens kann das Außenfederelement das aus dem Behälter herausragende Hubkolbenende mit der Außenseite der Wandungsklappe verbinden. Der damit erzielte Vorteil besteht vor allem darin, daß gleichzeitig eine Abdichtung der Ausnehmung der Wandungsklappe bzw. Rückwandtür erzielt wird, so daß das Mäh- oder Kehrgut nicht durch den den Hubkolben umgebenden Spalt gelangen kann.

Nach einer anderen Weiterbildung der Erfindung wird das Anschlagelement als starre Scheibe oder Platte, beispielsweise sogenannte Pilzscheibe ausgebildet. Vor allem wenn die Scheibe auf einem Hubkolbenabschnitt im Behälterinneren liegt, ist eine Anordnung dergestalt zweckmäßig, daß der Hubkolben sich über diese Scheibe (oder Platte) gegen die Innenseite des klappbaren Wandungsabschnitts abstützt. Mit anderen Worten, der mit seinem Ende die Ausnehmung der Klappwand durchsetzende Hubkolben stützt sich mit der starr aufgesetzten Scheibe an der Innenseite der Wandungsklappe ab, während das obengenannte Federelement vorzugsweise zwischen dem (außenliegenden) Kolbenende und der Außenseite der Klappwand liegt.

Bei Ausbildung der Platte oder Scheibe als sogenannte Pilzscheibe ergibt sich eine konvex gewölbte Oberfläche, die sich bei Anlage an der Innenseite der Klappwand darauf abrollen kann. Dieses Abrollen ist vor allem dann vorteilhaft, wenn die Klappwand um ihre Scharnierachse verschwenkt wird.

Mit all diesen auf der Erfindung basierenden Ausbildungen entfallen die bislang beim genannten Stand der Technik notwendigen Bügel, an denen Dreh- bzw. Anlenklager für den Hubkolben angeordnet wurden, vollständig. Die Klappwand braucht lediglich eine Öffnung bzw. Durchbruch bzw. Ausnehmung aufzuweisen, die etwas größer sein muß als der Durchmesser des Hubkolbens, damit dieser sich bei seiner Linearbewegung zum Aufschwenken oder Zuklappen entsprechend schräg stellen kann, ohne sich in der Öffnung zu verkanten oder verklemmen. Die Drehlager-Funktionen lassen sich in konstruktiv überraschend einfacher Weise durch die Anschlagelemente, sei es in Form von starr befestigten (Pilz)Scheiben, sei es in Form von Federelementen, realisieren.

Weitere Vorteile, Merkmale und Einzelheiten auf der Basis der Erfindung ergeben sich aus der nachfolgenden Beschreibung eines Ausführungsbeispiels sowie anhand der Zeichnung. Dabei zeigen:
- Fig. 1: in Seitenansicht einen Sammelgut-Behälter an einem Traktor während seines Entladens über einen Lastkraftwagen,
- Fig. 2: eine Schnittdarstellung durch diesen Behälter in Schließstellung (durchgezogene Linie) und Öffnungsstellung (gestrichelt angedeutet),
- Fig. 3 und 4: vergrößerte Schnittdarstellungen vom Angriffsbereich des Hubkolbens an der Klappwand in Schließ- bzw. Öffnungsstellung, und
- Fig. 5: eine vergrößerte Detailansicht der Klappwand im Bereich des Austrittsendes des Hubkolbens vom Behälterinneren (Schnitt gemäß der Linie V-V in Fig. 3).

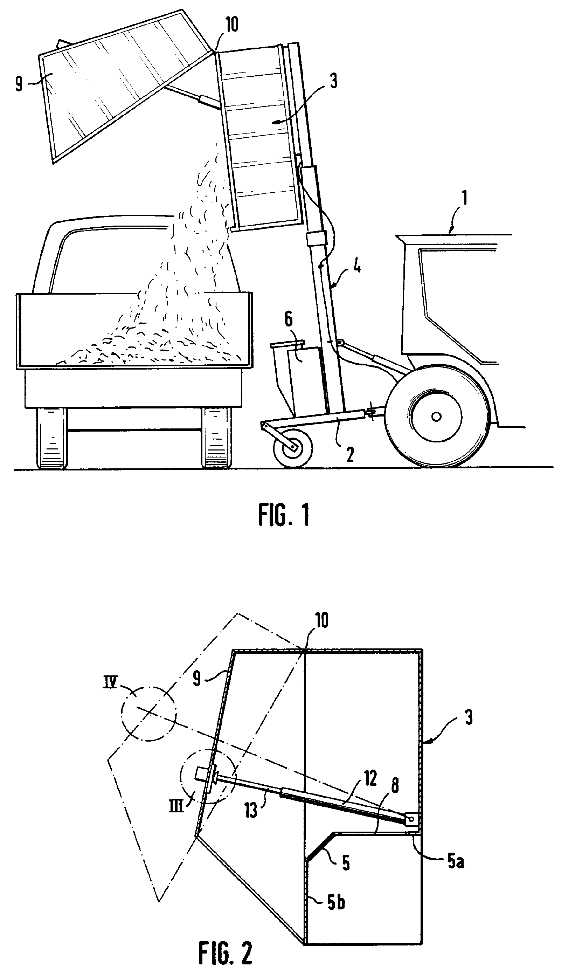

Gemäß Fig. 1 besteht die Mäh- oder Kehrvorrichtung aus einem an einen Traktor 1 mit einem nicht gezeigten, vorne angeflanschten Mäh- oder Kehrwerk angehängten einachsigen Anhänger 2, auf dem der Mäh- oder Kehrcontainer 3 über ein gabelstaplerartiges Hubgerüst 4 nach oben anhebbar angeordnet ist. Gemäß Fig. 2 ist unter dem geraden Abschnitt 5a des ansonsten geneigten Bodens 5, 5b ein Gebläse 6 (vgl. Fig. 1) vorgesehen, welches über einen flexiblen, in Fig. 1 nicht gezeigten Schlauch mit dem am vorderen Ende des Traktors 1 angeordneten Mähwerk bzw. Kehrwerk verbunden ist und das abgemähte Gras bzw. das aufgesammelte Kehrgut über eine Öffnung 8 im geraden Bodenabschnitt 5a in den Behälter 3 einbläst. Der im Ausführungsbeispiel kastenartig ausgebildete Wandungsabschnitt 9 des Behälters 3 ist über ein oberes horizontales Scharnier 10 mit der sonstigen Wandung des Behälters 3 verbunden. Das Öffnen und Schließen erfolgt über einen oder mehrere Stellantriebe, im Beispiel Hydraulikzylinder 12, die vorzugsweise in den Seitenbereichen des Behälterinnenraums angeordnet sind und an dem hinteren Klappwandungsabschnitt 9 angreifen.

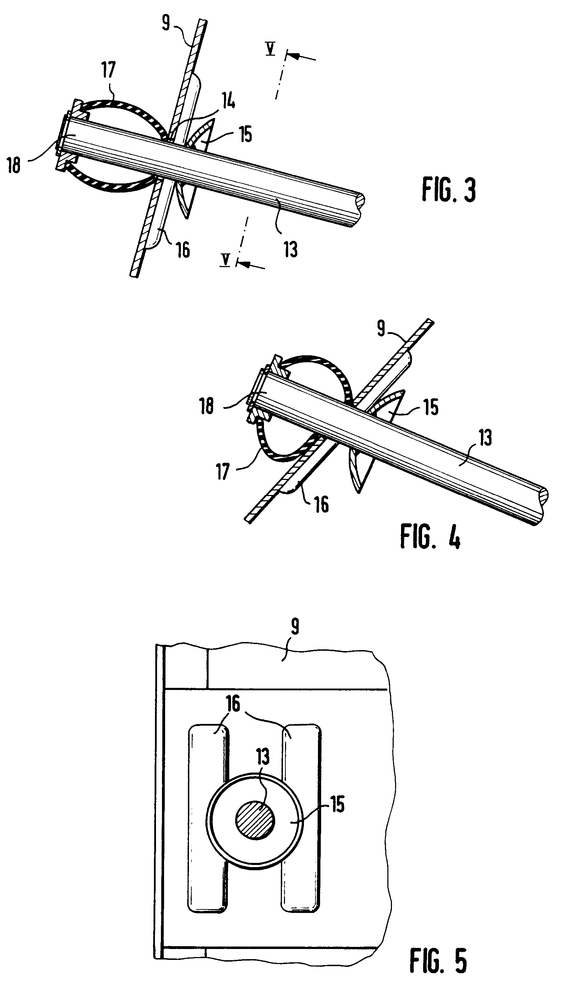

Der Hydraulikzylinder 12 durchsetzt mit seinem ausfahrbaren Hubkolben 13 eine Ausnehmung 14, die in dem Klappwandungsabschnitt 9 ausgespart ist. An diesem greift der Hubkolben 13 über eine darauf aufgeschweißte Pilzscheibe 15 an, indem diese sich an der Innenseite der Klappwandung 9 abstützt (vgl. Fig. 3 und 4).

Wie insbesondere aus Fig. 5 ersichtlich, sind neben der Ausnehmung 14 zwei Sicken 16 in die Klappwandung 9 eingelassen bzw. eingedrückt, an denen sich die Pilzscheibe 15 abstützt. Die Sicken bewirken dabei eine Versteifung und mechanische Stabilisierung des Angriffsbereichs der Wandung für den Hubkolben 13. Die Pilzscheibe 15 kann sich aufgrund ihrer konvexen Anlagefläche bei Öffnungs- und Schließbewegung entsprechend der sich verändernden Winkelstellung des Kolbens 13 gegenüber der Klappwand 9 abwälzen. Ein Vergleich der Fig. 3 mit Fig. 4 zeigt die sich verändernde Winkelstellung zwischen Hubkolben 13 und Klappwandung 9 beim Verschwenken sowie das dabei erfolgende Abwälzen der Pilzscheibe 9 auf den Sicken 16.

Gemäß Fig. 3 und 4 durchsetzt der Kolben 13 eine Gummihohlfeder 17, wobei sein aus dem Behälter herausragendes Ende 18 mit deren von der Wandungsklappe 9 entfernten Ende verbunden ist. Wie ersichtlich, dient die Gummihohlfeder 17 auch der Abdichtung bzw. dem Verschluß der Ausnehmung 14; gleichzeitig kann sie die Funktion einer Toleranzausgleichsfeder erfüllen, indem beim Einziehen des Kolbens 13 in den Hydraulikzylinder 12 nach dem vollständigen Zuklappen des Wandungsabschnitts 9 noch eine weitere Verschiebung des Kolbens 13 stattfinden kann, und zwar um das Maß der Zusammendrückbarkeit der Gummihohlfeder bzw. des Gummibalgs 17. Diese sichert also ein vollständiges dichtes Schließen der Klappwand auch unter Berücksichtigung von Toleranzen im Bewegungshub des Hubkolbens 13 sowie bei etwaigen auftretenden Verformungen der Klappwand. Darüber hinaus dichtet, wie bereits erwähnt, die Gummihohlfeder 17 auch die Ausnehmung 14 nach außen ab, so daß Mäh- und Kehrgut nicht durch den den Kolben 13 umgebenden Ringspalt in der Ausnehmung 14 nach außen geblasen werden kann.

Die Erfindung ist nicht auf das dargestellte Ausführungsbeispiel beschränkt. Nicht entscheidend ist die spezielle Ausbildung der Anschlagelemente, beispielsweise als Gummihohlfeder oder als Pilzscheibe; diese können beispielsweise auch durch einen Gummiblock oder eine Gummiplatte ersetzt werden. Indem erfindungsgemäß der klappbare Wandungsabschnitt von einem linearen Stellelement mit darauf innerhalb und/oder außerhalb des Behälters befestigten Anschlägen durchbrochen wird, entfallen kompliziert versteifte und gleichwohl störanfällige Gelenkstellen, wie sie bei der bekannten Anlenkung des Stellzylinders an der Innenseite der Klappwandung erforderlich sind. Die mit der Erfindung erzielte Einsparung von aufwendigen Konstruktionselementen führt bei der Fertigung zu einer erheblichen Zeit- und Kostenersparnis.

## Patentansprüche

1. Sammelgut-Behälter (3), insbesondere zum Anbau an Fahrzeugen (1) und Anhängern, mit einem scharniergelenkigen Wandungsabschnitt (9), der mittels eines im Behälterinneren abgestützten linearen Stellantriebs (12) auf- und zuklappbar ist, dadurch gekennzeichnet, daß der Hubkolben (13) des Stellantriebs (12) durch eine Ausnehmung (14) im klappbaren Wandungsabschnitt (9) geführt ist und innerhalb und/oder außerhalb des Behälters (3) ein oder mehrere Anschlagelemente (15, 17) zur Anlage an den klappbaren Wandungsabschnitt (9) aufweist.

2. Behälter nach Anspruch 1, gekennzeichnet durch ein Federelement, beispielsweise eine den Hubkolben (13) umgebende Gummihohlfeder (17), als Anschlagelement vorzugsweise außerhalb des Behälters (3).

3. Behälter nach Anspruch 2, dadurch gekennzeichnet, daß das Federelement (17) das herausragende Hubkolbenende (18) mit der Außenseite des klappbaren Wandungsabschnitts (9) verbindet.

4. Behälter nach einem der vorangehenden Ansprüche, gekennzeichnet durch eine starre Scheibe (15) oder Platte als Anschlagelement vorzugsweise innerhalb des Behälters (3).

5. Behälter nach Anspruch 3 und 4, dadurch gekennzeichnet, daß der Hubkolben (13) über die Scheibe (15) oder Platte gegen die Innenseite des klappbaren Wandungsabschnitts (9) abgestützt ist.

6. Behälter nach Anspruch 4 oder 5, dadurch gekennzeichnet, daß die Platte oder Scheibe (15) gegenüber der Innenseite des klappbaren Wandungsabschnitts (9) konvex gewölbt ist.

7. Behälter nach einem der vorangehenden Ansprüche, dadurch gekennzeichnet, daß der klappbare Wandungsabschnitt (9) eine oder mehrere seitlich der Ausnehmung (14) angeordnete Sicken (16) zur Anlage an das oder die Anschlagelemente (15, 17) aufweist.

## Claims

1. Collecting container (3), in particular for mounting on vehicles (1) and trailers, having a hinged wall section (9), which opens and closes by means of a linear actuator (12) supported inside the container, characterised in that the piston (13) of the actuator (12) is guided through a recess (14) in the opening wall section (9) and has, inside and/or outside the container (3), one or more stop elements (15, 17) for contact with the opening wall section (9).

2. Container according to claim 1, characterised by a spring element, e.g. a rubber, hollow spring (17) surrounding the piston (13), as a stop element preferably located outside the container (3).

3. Container according to claim 2, characterised in that the spring element (17) connects the projecting piston end (18) to the outside of the opening wall section (9).

4. Container according to one of the preceding claims, characterised by a rigid disc (15) or plate as a stop element preferably located inside the container (3).

5. Container according to claim 3 and 4, characterised in that the piston (13) bears against the inside of the opening wall section (9) via the disc (15) or plate.

6. Container according to claim 4 or 5, characterised in that the plate or disc (15) is convexly curved towards the inside of the opening wall section (9).

7. Container according to one of the preceding claims, characterised in that the opening wall section (9) has one or more beadings (16) disposed laterally next to the recess (14) for contact with the stop element or elements (15, 17).

## Revendications

1. Récipient collecteur (3), en particulier pour adjonction à des véhicules (1) et des remorques, avec une section de paroi (9) articulée sur charnière, susceptible d'être ouverte et fermée par rabattement au moyen d'un entraînement de positionnement (12) linéaire, prenant appui l'intérieur du récipient, caractérisé en ce que le piston de levage (13) de l'entraînement de positionnement (12) est guidé à travers un évidement (14) ménagé dans la section de paroi (9) rabattable et présente à l'intérieur et/ou à l'extérieur du récipient (3) un ou plusieurs éléments de butée (15, 17), destinés à l'appui à la section de paroi (9) rabattable.

2. Récipient selon la revendication 1, caractérisé par un élément de ressort, par exemple un ressort creux en caoutchouc (19) entourant la tige de piston (13) servant d'élément de butée, de préférence à l'extérieur du récipient (3).

3. Récipient selon la revendication 2, caractérisé en ce que l'élément de ressort (17) relie l'extrémité de piston de levage (18) faisant saillie à l'extérieur avec le côté extérieur de la section de paroi (9) rabattable.

4. Récipient selon l'une des revendications précédentes, caractérisé par un disque ou une plaque (15) rigide servant d'élément de butée de préférence à l'intérieur du récipient (3).

5. Récipient selon les revendications 3 et 4, caractérisé en ce que le piston de levage (13) prend appui, par l'intermédiaire du disque (15) ou de la plaque, conzre le côté intérieur de la section de paroi (9) rabattable.

6. Récipient selon la revendication 4 ou 5, caractérisé en ce que la plaque ou le disque (15) est bombé convexe par rapport au côté intérieur de la section de paroi (9) rabattable.

7. Récipient selon l'une des revendications précédentes caractérisé en ce que la section de paroi (9) rabattable présente une ou plusieurs moulures (16) disposées latéralement à l'évidement (14), pour l'appui à l'élément ou aux éléments de butée (15, 17).
